# EUROPÄISCHE PATENTSCHRIFT

(11) **EP 3 078 250 B1**
(45) Veröffentlichungstag und Bekanntmachung des Hinweises auf die Patenterteilung: **25.09.2019**
(21) Anmeldenummer: 16401023.3
(22) Anmeldetag: 31.03.2016
(51) Int. Cl.: A01C 15/00, B60J 7/12

(54) **ABDECKPLANENANORDNUNG FÜR EINEN VORRATSBEHÄLTER**
TARPAULIN ARRANGEMENT FOR A STORAGE TANK
SYSTÈME DE BÂCHES POUR RÉCIPIENT DE STOCKAGE

(30) Priorität: 09.04.2015 DE 102015105364
(43) Veröffentlichungstag der Anmeldung: 12.10.2016
(73) Patentinhaber: Amazonen-Werke H. Dreyer GmbH & Co. KG, 49205 Hasbergen (DE)
(72) Erfinder: Kleine-Hartlage, Hubertus, 49186 Bad Iburg (DE); Walter, Achim, 49078 Osnabrück (DE); Schiemenz, Friedhelm, 49205 Hasbergen (DE)

(56) Entgegenhaltungen:
- EP-A1- 1 645 177
- DE-A1- 19 818 064
- DE-A1-102011 001 519
- DE-U1-202013 009 703
- GB-A- 2 399 063

## Beschreibung

Die Erfindung betrifft einen Vorratsbehälter einer landwirtschaftlichen Verteilmaschine mit einer Abdeckplane gemäss dem Oberbegriff des Patentanspruches 1.

Eine derartige Abdeckplanenanordnung für einen Vorratsbehälter ist in der DE 10 2011 001 519 A1 beschrieben. Diese Abdeckplane ist auf der einen Seite fest an dem Vorratsbehälter befestigt. Das andere Ende der Abdeckplane ist an einem Schwenkbügel befestigt. In der Mitte der Abdeckplane ist ein weiterer Längsstab angeordnet. Zwischen diesem Gelenkstab und der Seite des Vorratsbehälters, an dem die Abdeckplane angeordnet ist, ist eine sich spiralförmig aufrollende Blattfeder angeordnet, über welche die Abdeckplane über ihre gesamte Länge eingerollt wird. Diese Abdeckplanenanordnung hat sich in der Praxis bewährt. Eine derartige Ausgestaltung hat den Vorteil, dass die Abdeckplane durch völliges Zusammenrollen kompakt an einer Seite des Vorratsbehälters bei geöffneter Behälteröffnung abgelegt werden kann. Andererseits ist diese Ausgestaltung relativ aufwändig und teuer.

Der Erfindung liegt die Aufgabe zu Grunde, eine preiswerte Abdeckplanenanordnung zu schaffen, welche auch eine möglichst vollständige Freigabe der Behälteröffnung nach dem Wegschwenken der Abdeckplane gewährleistet.

Diese Aufgabe wird erfindungsgemäß durch die Merkmale des kennzeichnenden Teils von Anspruch 1 gelöst.

Infolge dieser Maßnahme wird die Grundvoraussetzung dafür geschaffen, dass die Abdeckplane wie ein Sattel- oder Schleppdach bei geschlossener Behälteröffnung durch die Abdeckplane die Behälteröffnung in möglichst gestraffter Weise überspannt. Hierdurch bilden sich auf der Oberseite der Plane keine Vertiefungen, in welche sich in Art von "Wassersäcken" Wasser sammeln kann. Außerdem ergibt sich eine einfache Ausgestaltung der Abdeckplanenanordnung.

In bevorzugter Weise ist vorgesehen, dass die weitere Längsstange mit zumindest einer in Richtung der Seite der Abdeckplane, die an dem Vorratsbehälter befestigt ist, wirkenden Federkraft beaufschlagt ist. Hierdurch wird in geschlossenen Zustand der Abdeckplanenanordnung eine Erhöhung der Planspannkraft durch die wirksame Federkraft geschaffen, so dass insbesondere der längere und flach abfallende Bereich der Abdeckplane gestraft ist, so dass die Abdeckplane nicht durchhängt und sich so keine "Wassersäcke", in welchen sich Wasser sammeln könnte, bilden.

In einer Weiterbildung der Erfindung ist vorgesehen, dass die weitere Längsstange an der Abdeckplane in einem Abstand von der Befestigung der Abdeckplane am Vorratsbehälter, der zumindest annähernd dem 0,2- bis 0,3-fachen, vorzugsweise zumindest annähernd dem 0,25-fachen der Länge der Abdeckplane zwischen der Befestigung am Vorratsbehälter und der ersten Längsstange entspricht, befestigt ist. Hierdurch wird erreicht, dass eine vorteilhafte Faltung der Plane bei von der Behälteröffnung weggeschwenktem Zustand zur Freigabe der Behälteröffnung erreicht wird. Somit wird eine "Ablagefläche" der gefalteten Plane in geöffnetem Zustand an der Außenseite des Behälters durch entsprechendes Ablegen der Planenfalten der Abdeckplane auf einem erhöhten Ablagebereich, der durch die weitere Längsstange gebildet wird, im geöffneten Zustand der Behälteröffnung bei weggeschwenkter Abdeckplane erreicht. Somit behindert die weggeschwenkter Abdeckplane nicht das Befüllen des Vorratsbehälters.

In einfacher Weise lässt sich die auf die weitere Längsstange und somit auf die Abdeckplane einwirkende Federkraft dadurch realisieren, dass die auf die weitere Längsstange einwirkende Federkraft von zumindest einer Zugfeder, Spiralfeder oder Gasfeder erzeugt wird.

Eine vorteilhafte Ausgestaltung der Abdeckplanenanordnung lässt sich dadurch erreichen, dass die Seitenschenkel des Schwenkbügels der ersten Längsstange eine Länge zwischen der Schwenkachse des Schwenkbügels und der Längsstange aufweisen, die zumindest annähernd dem Abstand zwischen der Schwenkachse des Schwenkbügels und der äußeren Seite des Vorratsbehälters, an dem die Abdeckplane befestigt ist, entspricht.

Grundsätzlich ist die Länge der Abdeckplane der Abdeckplanenanordnung so gewählt, dass die Abdeckplane in ihrer die Behälteröffnung abdeckenden Position eine derartige Länge aufweist, dass sie in zumindest annähernd gestraffter Weise die Behälteröffnung abdeckt.

Weitere Einzelheiten der Erfindung sind der Beispielsbeschreibung und den Zeichnungen zu entnehmen. Die Zeichnungen zeigen
- Fig.1: den oberen Bereich eines Vorratsbehälters in perspektivischer Darstellung und in Prinzipdarstellung, wobei die Abdeckplane die gesamte Einfüllöffnung des Vorratsbehälters abgedeckt,
- Fig.2: den oberen Bereich eines Vorratsbehälters in Seitenansicht und in Prinzipdarstellung, wobei die Abdeckplane die gesamte Einfüllöffnung des Vorratsbehälters gemäß Fig.1 abdeckt,
- Fig.3: den oberen Bereich des Vorratsbehälters gemäß Fig.1 ebenfalls in perspektivischer Darstellung und in Prinzipdarstellung, wobei die Abdeckplane in einer 1. Phase zum Öffnen verschwenkt ist,
- Fig.4: den oberen Bereich eines Vorratsbehälters in Seitenansicht und in Prinzipdarstellung, wobei die Abdeckplane in einer 1. Phase zum Öffnen gemäß Fig.3 verschwenkt ist,
- Fig.5: den oberen Bereich des Vorratsbehälters gemäß Fig.1 ebenfalls in perspektivischer Darstellung und in Prinzipdarstellung, wobei die Abdeckplane in die Endposition zum Öffnen der Behälteröffnung verschwenkt ist und
- Fig.6: den oberen Bereich eines Vorratsbehälters in Seitenansicht und in Prinzipdarstellung, wobei die Abdeckplane in die Endposition zum Öffnen der Behälteröffnung gemäß Fig.5 verschwenkt ist.

Der Vorratsbehälter 1 einer landwirtschaftlichen Verteilmaschine ist auf einem nicht dargestellten Rahmen angeordnet. Auf der in Fahrtrichtung 2 vorderen Seite 3 ist ein nicht dargestellter Kuppelrahmen zum ankuppeln des Rahmens, der den Vorratsbehälter 1 trägt, an eine Kuppelvorrichtung, beispielsweise eines Ackerschleppers, angeordnet. Der Vorratsbehälter 1 weist eine Einfüllöffnung 4 auf, die sich in dem dargestellten Ausführungsbeispiel zumindest annähernd über den gesamten oberen Querschnitt des Vorratsbehälters 1 erstreckt.

Die Einfüllöffnung 4 des Vorratsbehälters 1 ist mittels der Abdeckplane 5 abgedeckt. Die Abdeckplane 5 ist auf ihrer in Fahrtrichtung 2 vorderen Seite 6 an dem Vorratsbehälter 1 im Bereich der Einfüllöffnung 4 mittels geeigneter Befestigungsmittel befestigt. Das andere Ende 7 der Abdeckplane 5 weist einen schlaufenartigen Bereich 8 auf. Durch diesen schlaufenartigen Bereich 8 ist eine erste Längsstange 9 gesteckt. An den äußeren Enden 10 der ersten Längsstange 9 sind jeweils Schwenkstangen 11 befestigt. Die erste Längsstange 9 und die Schwenkstangen 11 bilden den Schwenkbügel 12. Weiterhin weist die Abdeckplane 5 in ihrem vorderen Bereich 13 ebenfalls einen schlaufenartigen Bereich 14 auf, durch den eine weitere Längsstange 15 gesteckt ist. Die weitere Längsstange 15 verläuft parallel zu der Seite des Vorratsbehälters 1, an dem die Abdeckplane 5 befestigt ist, und zu der Längsstange 9. An den Enden des weiteren Längsstabes 15 sind die Schwenkstangen 16 befestigt. Die weitere Längsstange 15 und die Schwenkstangen 16 bilden den Schwenkbügel 17.

Die Schwenkstangen 11 und 16 sind jeweils mit Schwenkgelenken 18 bzw. 19, deren Schwenkachsen parallel zu den Lenkstangen 9 und 15 verlaufen, verschwenkbar an dem oberen Bereich des Vorratsbehälters 1 befestigt.

Der besseren Übersichtlichkeit halber sind die seitlichen dreieckförmigen Giebelseiten der Abdeckplane 5 nicht dargestellt. Die nicht dargestellten dreieckförmigen Giebelseiten der Abdeckplane 5 decken diesem Bereich ab, so dass die Behälteröffnung 4 des Vorratsbehälters 1 in geschlossenen Zustand der Abdeckplane 5 vollkommen verschlossen ist.

Die weitere Längsstange 15 ist an der Abdeckplane 5 in einem Abstand A von der Befestigung der Abdeckplane am Vorratsbehälter, der zumindest annähernd dem 0,2- bis 0,3-fachen, vorzugsweise zumindest annähernd dem 0,25-fachen der Länge der Abdeckplane 5 zwischen der Befestigung 6 am Vorratsbehälter 1 und der Befestigung an der ersten Längsstange 9 entspricht, befestigt.

Weiterhin ist die weitere Längsstange 15 mit zumindest einer in Richtung 20 der Seite 6 der Abdeckplane 5, die an dem Vorratsbehälter 1 befestigt ist, wirkenden Federkraft 21 beaufschlagt. Diese Federkraft wird im Ausführungsbeispiel durch Zugfedern 21, die zwischen der Schwenkgestänge 16 und der vorderen Seite des Vorratsbehälters 1 angeordnet sind, erzeugt. Anstelle von Zugfedern 21 können auch Spiralfedern oder Gasfedern zum Einsatz kommen. Diese Anordnung ist so gewählt, dass die Abdeckplane 5 in Richtung der vorderen Seite 3, an welcher die Abdeckplane 5 am Vorratsbehälter 1 befestigt ist, durch die Zugfeder 21 gezogen wird.

Die als Schwenkstangen 16 ausgebildeten Seitenschenkel des ersten Schwenkbügels 12 der ersten Längsstange 9 weisen eine Länge zwischen der Schwenkachse des Schwenkbügels 12 und der ersten Längsstange 9 auf, die zumindest annähernd dem Abstand zwischen der Schwenkachse 9 des Schwenkbügels 9 und der äußeren Seite 3 des Vorratsbehälters 1, an dem die Abdeckplane 5 befestigt ist, entspricht.

Die Abdeckplane 5 weist in ihrer die Behälteröffnung 4 abdeckenden Position eine derartige Länge auf, dass sie in zumindest annähernd gestraffter Weise Behälteröffnung abdeckt.

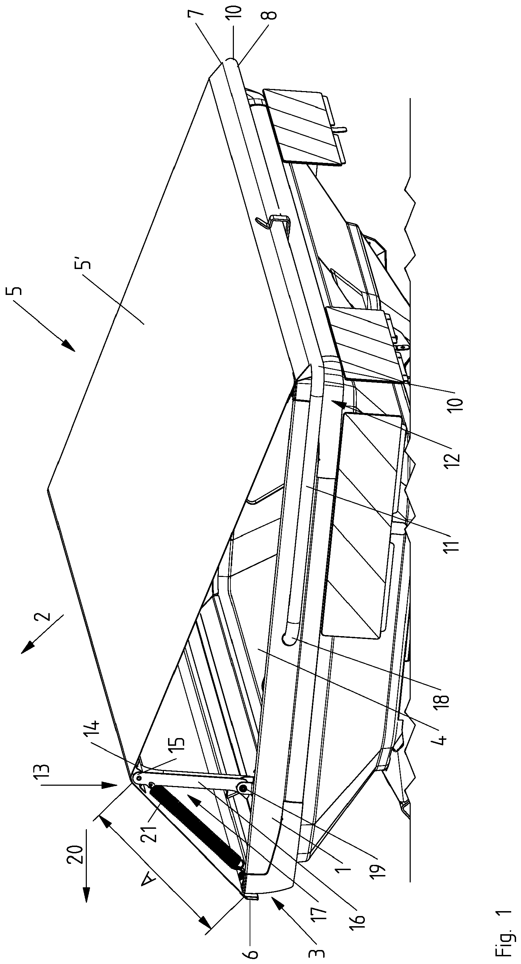

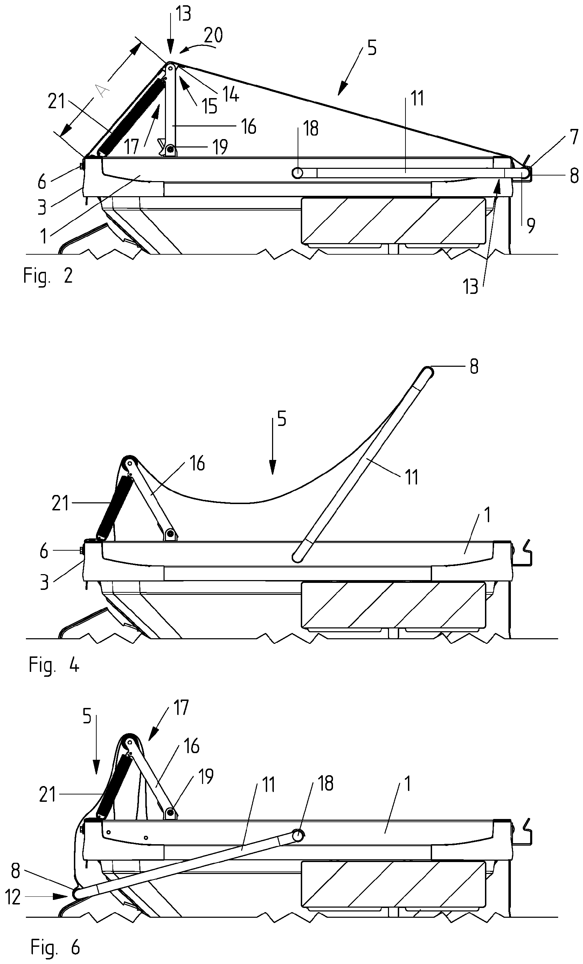

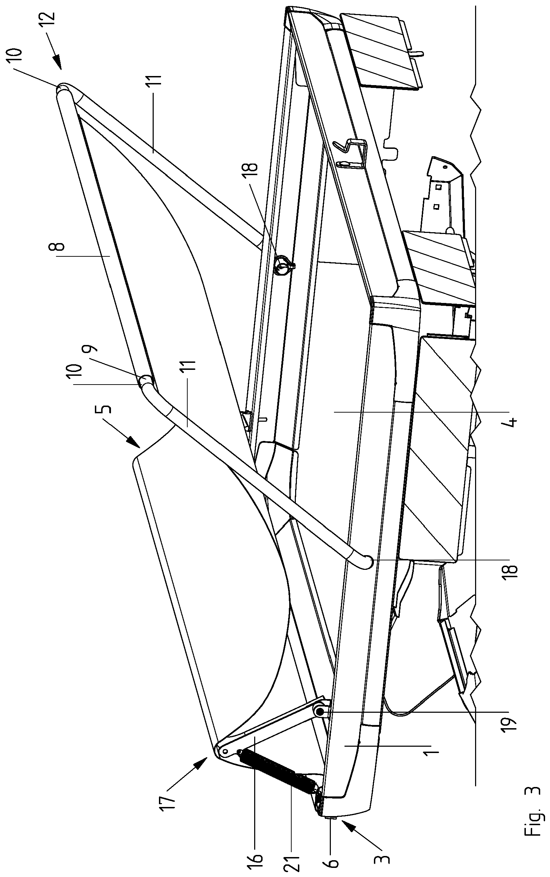

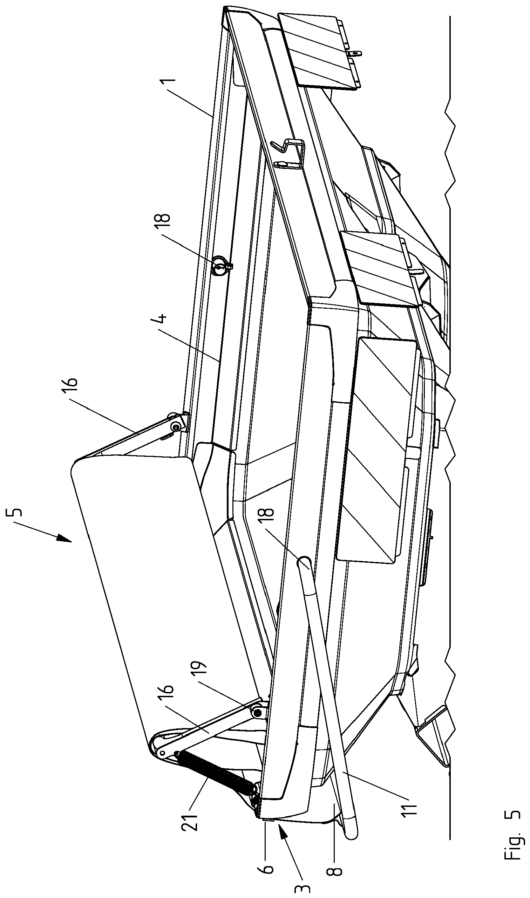

Die Anordnung der Abdeckplane 5 und der Schwenkbügel 12 und 17 sowie die Anordnung der Schwenkbügel 12 und 17 an der Abdeckplane 5 ist so getroffen, dass nach dem Verschwenken der Schwenkbügel 12 und 17 und der Abdeckplane aus der die Behälteröffnung abdeckenden Position gemäß Fig. 1 und 2 über die Zwischenstellung gemäß den Fig. 3 und 4 in ihre Öffnungsstellung gemäß Fig. 5 und 6 die Abdeckplane 5 in vier dicht zusammenliegenden Lagen zusammen gefaltet wird, wie Fig. 5 und 6 zeigen. Durch dieses Zusammenfalten, wie es schematisch in den Fig. 5 und 6 dargestellt ist, wird quasi die gesamte Behälteröffnung 4 frei gegeben, so dass der Behälter 1 ohne Störung problemlos zu befüllen ist. Auch wird die zusammengefaltete Abdeckplane 5 nicht zugeschüttet.

In der geschlossenen Position der Abdeckplane 5 gemäß den Fig.1 und 2 wird der flach abfallende und größere Bereich 5' der Abdeckplane 5 über die Zugfeder 21 und den Schwenkbügel 16 gestraft, so dass sich keine Vertiefungen oder Durchhänger als "Wassersäcke" ausbilden können, in denen sich Wasser sammeln könnte.

## Patentansprüche

1. Vorratsbehälter (1) einer landwirtschaftlichen Verteilmaschine mit einer Abdeckplane (5), dessen obere Behälteröffnung (4) mittels der Abdeckplane (5) abdeckbar ist, wobei die Abdeckplane (5) an ihrer einen Seite (6) am Vorratsbehälter (1) und auf ihrer gegenüberliegenden Seite (7) an einer ersten Längsstange (9) befestigt ist, wobei die erste Längsstange (9) an einem um eine etwa in der Mitte des Vorratsbehälters (1) sich befindlichen Gelenksachse verschwenkbaren Schwenkbügel (12) befestigt und/oder Bestandteil des Schwenkbügels (12) ist, wobei der Schwenkbügel (12) am Vorratsbehälter (1) schwenkbar angelenkt ist, wobei die Abdeckplane (5) zur Freigabe der Einfüllöffnung (4) des Vorratsbehälters (1) mittels des Schwenkbügels (12) wegschwenkbar ist, wobei an der Abdeckplane (5) zumindest eine weitere Längsstange (15) angeordnet ist, die parallel zu der Seite (3) des Vorratsbehälters (1), an der die Abdeckplane (5) befestigt ist, und zu der ersten Längsstange (9) verläuft, **dadurch gekennzeichnet, dass** die weitere Längsstange (15) ebenfalls mittels eines Schwenkbügels (17) und/oder als Bestandteil eines Schwenkbügels (17) verschwenkbar (1) an dem Vorratsbehälter (15) befestigt ist, dass die weitere Längsstange (15) an der Abdeckplane (5) dichter an der Seite (3, 6), an der die Abdeckplane (5) an dem Vorratsbehälter (1) befestigt ist, befestigt ist als an der Seite (7), an der die Abdeckplane (5) an der ersten Längsstange (9) befestigt ist.

2. Vorratsbehälter nach Anspruch 1, **dadurch gekennzeichnet, dass** die weitere Längsstange (15) mit zumindest einer in Richtung der Seite (3, 6) der Abdeckplane (5), die an dem Vorratsbehälter (1) befestigt ist, wirkenden Federkraft beaufschlagt ist.

3. Vorratsbehälter nach zumindest einem der vorstehenden Ansprüche, **dadurch gekennzeichnet, dass** die weitere Längsstange (15) an der Abdeckplane (5) in einem Abstand (A) von der Befestigung der Abdeckplane (5) am Vorratsbehälter (1) befestigt ist, der zumindest annähernd dem 0,2- bis 0,3-fachen, vorzugsweise zumindest annähernd dem 0,25-fachen der Länge der Abdeckplane (5) zwischen der Befestigung (3, 6) am Vorratsbehälter (1) und der Befestigung an der ersten Längsstange (9) entspricht.

4. Vorratsbehälter nach Anspruch 2, **dadurch gekennzeichnet, dass** die auf die weitere Längsstange (15) einwirkende Federkraft von zumindest einer Zugfeder (16), Spiralfeder oder Gasfeder erzeugt wird.

5. Vorratsbehälter nach zumindest einem der vorstehenden Ansprüche 1, **dadurch gekennzeichnet, dass** Seitenschenkel (11) des Schwenkbügels (12) der ersten Längsstange (9) eine Länge zwischen der Schwenkachse des Schwenkbügels und der Längsstange (9) aufweisen, die zumindest annähernd dem Abstand zwischen der Schwenkachse des Schwenkbügels (12) und der äußeren Seite (3) des Vorratsbehälters (1), an der die Abdeckplane (5) befestigt ist, entspricht.

6. Vorratsbehälter nach zumindest einem der vorstehenden Ansprüche 1, **dadurch gekennzeichnet, dass** die Abdeckplane (5) in ihrer die Behälteröffnung (4) abdeckenden Position eine derartige Länge aufweist, dass sie in zumindest annähernd gestraffter Weise die Behälteröffnung (4) abdeckt.

## Claims

1. Storage tank (1) of an agricultural distribution machine, having a covering tarpaulin (5), the upper tank opening (4) of which storage tank can be covered by means of the covering tarpaulin (5), wherein the covering tarpaulin (5) is fastened on its one side (6) to the storage tank (1) and on its opposite side (7) to a first longitudinal bar (9), wherein the first longitudinal bar (9) is fastened to a pivot arm (12) that is pivotable about a pivot pin located approximately in the middle of the storage tank (1) and/or is part of the pivot arm (12), wherein the pivot arm (12) is articulated in a pivotable manner on the storage tank (1), wherein the covering tarpaulin (5) is pivotable away by means of the pivot arm (12) in order to clear the filling opening (4) of the storage tank (1), wherein at least one further longitudinal bar (15) is arranged on the covering tarpaulin (5) and is fastened parallel to that side (3) of the storage tank (1) to which the covering tarpaulin (5) runs, and to the first longitudinal bar (9), **characterized in that** the further longitudinal bar (15) is likewise fastened pivotably (1) to the storage tank (15) by means of a pivot arm (17) and/or as part of a pivot arm (17), **in that** the further longitudinal bar (15) is fastened to the covering tarpaulin (5) closer to the side (3, 6) at which the covering tarpaulin (5) is fastened to the storage tank (1) than to the side (7) at which the covering tarpaulin (5) is fastened to the first longitudinal bar (9).

2. Storage tank according to Claim 1, **characterized in that** the further longitudinal bar (15) is acted upon with at least a spring force acting in the direction of that side (3, 6) of the covering tarpaulin (5) which is fastened to the storage tank (1).

3. Storage tank according to at least either of the preceding claims, **characterized in that** the further longitudinal bar (15) is fastened to the covering tarpaulin (5) at a distance (A) from the fastening of the covering tarpaulin (5) to the storage tank (1), which distance at least approximately corresponds to 0.2 to 0.3 times, preferably at least approximately 0.25 times the length of the covering tarpaulin (5) between the fastening (3, 6) to the storage tank (1) and the fastening to the first longitudinal bar (9).

4. Storage tank according to Claim 2, **characterized in that** the spring force acting on the further longitudinal bar (15) is produced by at least one tension spring (16), spiral spring or gas spring.

5. Storage tank according to at least one of the preceding Claims 1, **characterized in that** side limbs (11) of the pivot arm (12) of the first longitudinal bar (9) have a length between the pivot axis of the pivot arm and the longitudinal bar (9) that corresponds at least approximately to the distance between the pivot axis of the pivot arm (12) and the outer side (3) of the storage tank (1), to which side the covering tarpaulin (5) is fastened.

6. Storage tank according to at least one of the preceding Claims 1, **characterized in that** the covering tarpaulin (5) in its position covering the tank opening (4) has such a length that it covers the tank opening (4) in an at least approximately taut manner.

## Revendications

1. Récipient de stockage (1) d'une machine de distribution agricole avec une bâche (5), dont l'ouverture supérieure du récipient (4) peut être recouverte au moyen de la bâche (5), dans lequel la bâche (5) est fixée sur son premier côté (6) au récipient de stockage (1) et sur son côté opposé (7) à une première barre longitudinale (9), dans lequel la première barre longitudinale (9) est fixée à un étrier pivotant (12) pouvant pivoter autour d'un axe d'articulation se trouvant environ au milieu du récipient de stockage (1) et/ou est un composant de l'étrier pivotant (12), dans lequel l'étrier pivotant (12) est articulé de façon pivotante au récipient de stockage (1), dans lequel la bâche (5) peut être écartée au moyen de l'étrier pivotant (12) pour la libération de l'ouverture de remplissage (4) du récipient de stockage (1), dans lequel au moins une autre barre longitudinale (15) est disposée sur la bâche (5), et s'étend parallèlement au côté (3) du récipient de stockage (1) auquel la bâche (5) est fixée, et à la première barre longitudinale (9), **caractérisé en ce que** l'autre barre longitudinale (15) est également fixée de façon pivotante (1) au récipient de stockage (15) au moyen d'un étrier pivotant (17) et/ou est un composant d'un étrier pivotant (17), **en ce que** l'autre barre longitudinale (15) est fixée à la bâche (5) plus près du côté (3, 6) auquel la bâche (5) est fixée au récipient de stockage (1) que du côté (7) auquel la bâche (5) est fixée à la première barre longitudinale (9).

2. Récipient de stockage selon la revendication 1, **caractérisé en ce que** l'autre barre longitudinale (15) est soumise à au moins une force de ressort agissant en direction du côté (3, 6) de la bâche (5), qui est fixé au récipient de stockage (1).

3. Récipient de stockage selon au moins une des revendications précédentes, **caractérisé en ce que** l'autre barre longitudinale (15) est fixée à la bâche (5) à une distance (A) de la fixation de la bâche (5) au récipient de stockage (1), qui correspond au moins approximativement à 0,2 à 0,3 fois, de préférence au moins approximativement à 0,25 fois la longueur de la bâche (5) entre la fixation (3, 6) au récipient de stockage (1) et la fixation à la première barre longitudinale (9).

4. Récipient de stockage selon la revendication 2, **caractérisé en ce que** la force de ressort agissant sur l'autre barre longitudinale (15) est produite par au moins un ressort de traction (16), un ressort hélicoïdal ou un ressort à gaz.

5. Récipient de stockage selon au moins une des revendications précédentes 1, **caractérisé en ce que** des branches latérales (11) de l'étrier pivotant (12) de la première barre longitudinale (9) présentent une longueur entre l'axe de pivotement de l'étrier pivotant et la barre longitudinale (9), qui correspond au moins approximativement à la distance entre l'axe de pivotement de l'étrier pivotant (12) et le côté extérieur (3) du récipient de stockage (1), auquel la bâche (5) est attachée.

6. Récipient de stockage selon au moins une des revendications précédentes 1, **caractérisé en ce que** la bâche (5) présente, dans sa position recouvrant l'ouverture (4) du récipient, une longueur telle qu'elle recouvre d'une façon au moins approximativement tendue l'ouverture (4) du récipient.
